# EUROPEAN PATENT APPLICATION

(11) **EP 4 648 204 A1**
(43) Date of publication of application: **12.11.2025**
(21) Application number: 24868475.5
(22) Date of filing: 08.08.2024
(51) Int. Cl.: H01M 50/383, H01M 50/30, H01M 50/358, H01M 50/211, H01M 50/249

(54) **BATTERY PACK AND VEHICLE COMPRISING SAME BATTERY PACK**

(30) Priority: 20.09.2023 KR 20230125639
(71) Applicant: LG Energy Solution, Ltd., Seoul 07335 (KR)
(72) Inventor: YUN, Hyun-Seop, Daejeon 34122 (KR); KIM, Byung-Kyu, Daejeon 34122 (KR); HAN, Min-Hee, Daejeon 34122 (KR)
(74) Representative: Plasseraud IP
(86) International application number: PCT/KR2024/011826
(87) International publication number: WO 2025/063496

(57) **Abstract**

A battery pack according to an embodiment of the present disclosure includes: a plurality of battery cells; a pack case configured to accommodate the plurality of battery cells and having a venting unit configured to discharge gas generated from the battery cells to the outside; and a composite blocking member configured to cover at least a portion of the venting unit and block flame generated inside the pack case from being exposed to the outside.

## Description

### TECHNICAL FIELD

The present disclosure relates to a battery pack and a vehicle including the same.

This application is based on and claims priority from Korean Patent Application No. 10-2023-0125639, filed on September 20, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (REVs), as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

A battery pack may be configured by connecting multiple battery cells in series/parallel depending on the charge/discharge capacity required for the electric vehicles (EVs) or hybrid electric vehicles (HEVs). In this case, it is common to preferentially configure a battery module including at least one battery cell, and then configure a battery pack or battery rack by adding other components using at least one battery module above. Alternatively, recently, a cell-to-pack-type battery pack has been manufactured in which a plurality of battery cells are not modularized but directly stored in a pack housing or the like.

However, if a fire or explosion occurs in the battery pack including such a large number of lithium secondary batteries, the damage is bound to be even greater. A fire occurring in the battery pack starts from an abnormal temperature increase of the battery cell disposed inside and internal gas generation therefrom. Accordingly, if the internal pressure of the battery cell rises above a certain level, venting may occur and flame may occur inside the battery pack.

Therefore, in order to secure safety in use of the battery pack when a thermal event such as thermal runaway occurs inside the battery pack, the venting gas must be quickly discharged to the outside of the battery pack so that the internal pressure of the battery pack does not increase any further. If the venting gas or the like is not properly discharged to the outside, the rate at which thermal runaway propagates between battery cells may increase. In addition, it may cause a bigger problem such as an explosion of the battery pack, so it is very important to discharge the venting gas to the outside.

Accordingly, existing battery packs are provided with a venting unit in the pack case to discharge high-temperature venting gas or the like to the outside of the pack case when a thermal event occurs in a specific battery cell or battery module.

However, in the case of the conventional battery packs, flames or ignitable particles generated inside the battery pack are likely to be exposed to the outside of the pack case through the venting unit. Accordingly, the flame or the like may spread to other adjacent battery packs or a device equipped with the battery pack, causing a bigger problem.

Accordingly, there is a growing need for a technology of preventing flame or the like from being exposed to the outside of the battery pack while smoothly discharging venting gas to the outside of the battery pack through the venting unit, thereby suppressing flame or fire from spreading outside the battery pack.

### DISCLOSURE

### Technical Problem

The present disclosure is designed to solve the problems of the related art, and therefore the present disclosure is directed to providing a battery pack capable of preventing flame or the like from being exposed to the outside of the battery pack in the event of an abnormal situation of a battery cell or a battery module.

In addition, the present disclosure is also to provide a battery pack capable of smoothly discharging venting gas to the outside of the battery pack in the event of an abnormal situation of a battery cell or a battery module.

In addition, the present disclosure is also to provide a battery pack capable of preventing or suppressing thermal runaway propagation in units of battery packs.

In addition, the present disclosure is also to provide a battery pack with improved safety and reliability in the event of an abnormal situation of a battery cell or a battery module.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery cells; a pack case configured to accommodate the plurality of battery cells and having a venting unit configured to discharge gas generated from the battery cells to the outside; and a composite blocking member configured to cover at least a portion of the venting unit and block flame generated inside the pack case from being exposed to the outside.

The composite blocking member may be provided between the plurality of battery cells and the venting unit.

The pack case may include a base frame on which the plurality of battery cells are placed, and a side frame extending upward from the base frame and having the venting unit provided thereon, and the composite blocking member may be configured to face the side frame on which the venting unit is formed.

The composite blocking member may be configured to be bolted to the side frame.

The composite blocking member may be configured in a multi-structured plate configured to cover the venting unit.

The composite blocking member may include a mesh member configured to filter the flame and allow the gas to pass therethrough, and a blocking wall provided on at least one side of the mesh member so as to cover at least one side of the mesh member.

The blocking wall may be configured to include a mica material.

The composite blocking member may include a through-hole formed by perforating a portion of the blocking wall and configured to allow the gas to pass therethrough.

The composite blocking member may further include a coating layer formed by coating an outer surface of the blocking wall with a material having fire resistance.

The blocking wall may include a first blocking wall provided between the venting unit and the mesh member, and a second blocking wall provided on the other side of the mesh member.

The mesh member, the first blocking wall, and the second blocking wall may be configured to be stacked in one direction.

The composite blocking member may include one or more first through-holes and one or more second through-holes formed on the first blocking wall and the second blocking wall, respectively, and configured to allow the gas to pass therethrough.

The first through-holes and the second through-holes may be configured to be staggered with each other along the one direction.

A plurality of first through-holes may be arranged in rows and columns, and the second through-holes may be arranged in rows and columns to be staggered with the first through-holes along the one direction.

The mesh member may be configured to completely cover the front of the venting unit, and the blocking wall may be provided further inward than the mesh member and configured to cover an upper portion of the venting unit, thereby blocking the flame.

The battery pack may further include a module case configured to accommodate the plurality of battery cells in an inner space thereof and having a venting hole formed on the upper side so as to communicate with the inner space.

The composite blocking member may further include a lower bent portion configured to be bent from a lower end of the blocking wall in a direction away from the mesh member.

The lower bent portion may be configured to form an obtuse angle with the blocking wall.

In addition, a vehicle according to the present disclosure may include a battery pack according to the present disclosure.

### Advantageous Effects

According to one aspect of the present disclosure, flames or ignitable particles generated in an abnormal situation of a battery cell or battery module may be prevented from being exposed to the outside of the battery pack, thereby ensuring safety and reliability.

Furthermore, according to another aspect of the present disclosure, flames may be prevented from being exposed to the outside of the battery pack, thereby effectively securing thermal runaway propagation prevention performance in units of battery packs.

In addition, according to another aspect of the present disclosure, venting gas generated in an abnormal situation of the battery cell may be smoothly discharged to the outside of the pack case. Therefore, other battery cells or battery modules may be prevented from being thermally damaged, thereby preventing further chain ignition.

According to another aspect of the present disclosure, events due to thermal runaway in a battery pack or a device equipped with the same, such as fire or explosion, may be prevented or delayed.

In particular, in the case of an electric vehicle, sufficient time may be secured for passengers to escape or drive by suppressing or delaying thermal runaway propagation between battery cells or battery modules.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery pack according to an embodiment of the present disclosure.
FIG. 3 is a perspective view of a battery module included in a battery pack according to an embodiment of the present disclosure.
FIG. 4 is an enlarged view of a primary part of a battery pack according to an embodiment of the present disclosure.
FIG. 5 is a drawing illustrating a composite blocking member included in a battery pack according to an embodiment of the present disclosure, which may be, for example, a cross-sectional view taken along line I - I' in FIG. 1.
FIG. 6 is an enlarged cross-sectional view of a primary part of a battery pack according to an embodiment of the present disclosure.
FIG. 7 is an exploded perspective view of a composite blocking member included in a battery pack according to an embodiment of the present disclosure.
FIG. 8 is an enlarged cross-sectional view of a primary part of a battery pack according to another embodiment of the present disclosure.
FIG. 9 is an enlarged cross-sectional view of a primary part of a battery pack according to another embodiment of the present disclosure.
FIG. 10 is an exploded perspective view of a composite blocking member included in a battery pack according to another embodiment of the present disclosure.
FIG. 11 is a cross-sectional view of a battery pack when viewed from above according to another embodiment of the present disclosure, which may be a cross-sectional view taken along line II - II' in FIG. 1.
FIG. 12 is a cross-sectional view of a battery pack according to another embodiment of the present disclosure, which may be a cross-sectional view taken along line I - I' in FIG. 1.
FIG. 13 is an enlarged cross-sectional view of a primary part of a battery pack according to another embodiment of the present disclosure.
FIG. 14 is an exploded perspective view of a composite blocking member included in a battery pack according to another embodiment of the present disclosure.
FIG. 15 is an enlarged cross-sectional view of a primary part of a battery pack according to another embodiment of the present disclosure.
FIG. 16 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of the same or similar configurations between the embodiments will be omitted, and a description will be made based on differences therebetween.

Meanwhile, although terms indicating directions such as up, down, left, right, front, and back directions are used in this specification, it is obvious to those skilled in the art that these terms are only for convenience of explanation and may vary depending on the position of the target object or the position of the observer.

For example, in the embodiments of the present disclosure, the X-axis direction shown in the drawing may indicate the left-right direction, the Y-axis direction may indicate the front-back direction perpendicular to the X-axis direction on the horizontal plane (X-Y plane), and the Z-axis direction may indicate the up-down direction (vertical direction) perpendicular to both the X-axis direction and the Y-axis direction.

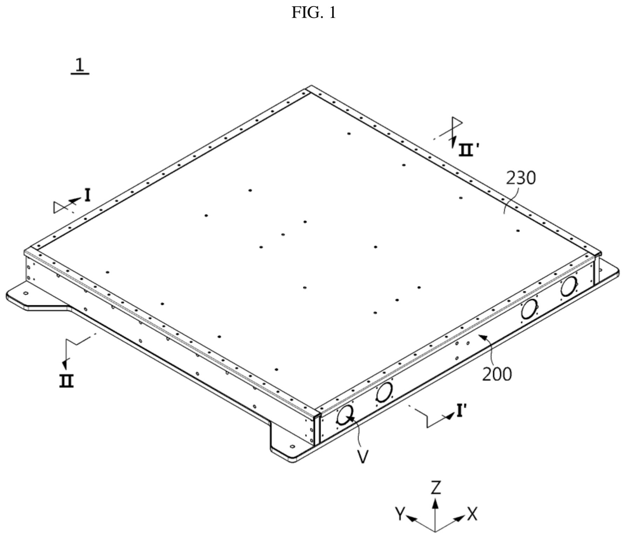

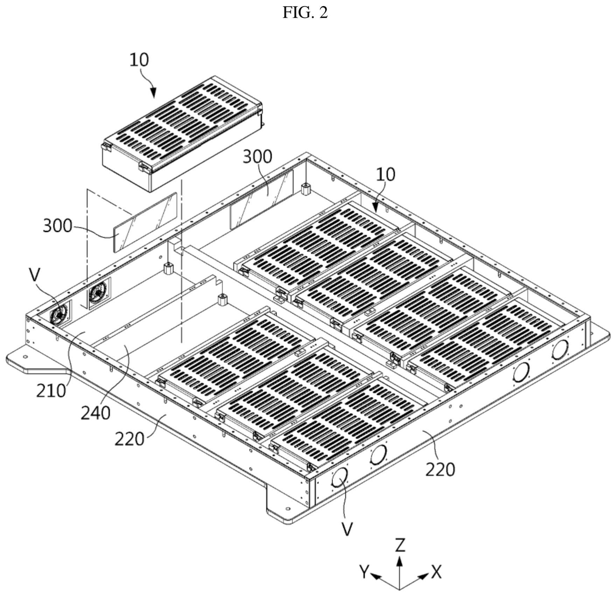

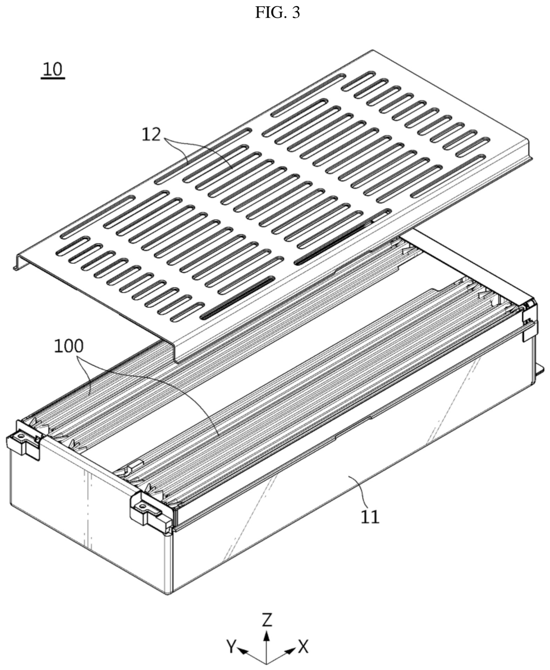

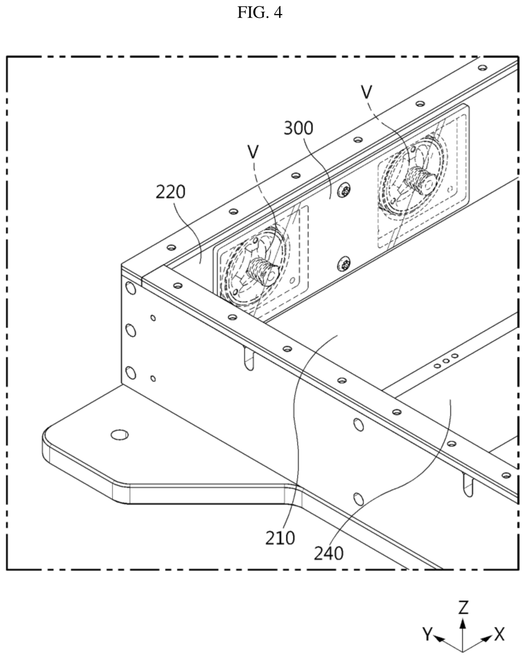

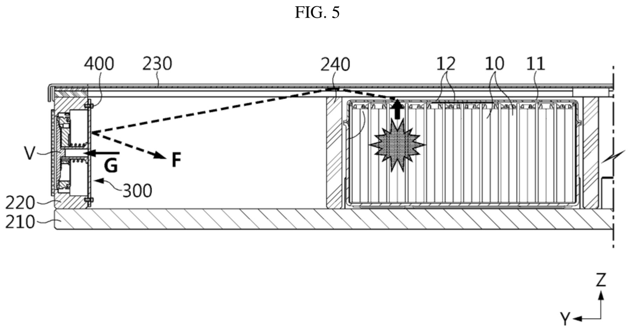

FIG. 1 is a perspective view of a battery pack according to an embodiment of the present disclosure, FIG. 2 is an exploded perspective view of a battery pack according to an embodiment of the present disclosure, and FIG. 3 is a perspective view of a battery module included in a battery pack according to an embodiment of the present disclosure. In addition, FIG. 4 is an enlarged view of a primary part of a battery pack according to an embodiment of the present disclosure. In addition, FIG. 5 is a drawing illustrating a composite blocking member included in a battery pack according to an embodiment of the present disclosure, which may be, for example, a cross-sectional view taken along line I - I' in FIG. 1.

Referring to FIGS. 1 to 5, a battery pack 1 according to an embodiment of the present disclosure includes a battery cell 100, a pack case 200, and a composite blocking member 300.

First, referring to FIG. 1, the battery pack 1 according to the present disclosure may include a pack case 200. The pack case 200 constitutes the exterior of the battery pack 1. The pack case 200 may have an overall shape resembling a cuboid having predetermined lengths in the X-axis, Y-axis, and Z-axis directions, respectively.

Referring further to FIGS. 2 and 3, the battery pack 1 according to the present disclosure may include at least one battery module 10, preferably, a plurality of battery modules 10. The battery module 10 may be accommodated in the pack case 200 in FIG. 1.

In addition, each of the plurality of battery modules 10 may include a plurality of battery cells 100. In this case, the plurality of battery cells 100 included in the battery module 10 may be electrically connected to each other. That is, the battery pack 1 according to the present disclosure may include a plurality of battery modules 10, and the plurality of battery cells 100 included in the battery pack 1 may be divided and included in the plurality of battery modules 10.

Referring to FIG. 3, a plurality of battery cells 100 may be included. In addition, although not shown in the drawing, the plurality of battery cells 100 may include an electrode assembly, a cell case that accommodates the electrode assembly, and an electrode lead connected to the electrode assembly and extending to the outside of the cell case to function as an electrode terminal. In this case, the plurality of battery cells 100 may be electrically connected to each other.

The battery cell 100 may be a pouch-type secondary battery. The cell case of the pouch-type secondary battery may be configured in a pouch in which an aluminum metal layer is interposed between polymer layers.

In addition, although not shown in the drawing, the pouch-type battery cell 100 may include an electrode assembly, a cell case that accommodates the electrode assembly, and an electrode lead that is connected to the electrode assembly and extends to the outside of the cell case to function as an electrode terminal. The cell case may include a storage portion that accommodates the electrode assembly and a sealing portion that seals the edge of the storage portion.

As shown in FIG. 3, the plurality of battery cells 100 may be arranged side by side in the front-back direction (Y-axis direction) while standing in the vertical direction (Z-axis direction). In this case, the sealing portion of each battery cell 100 may face in left-right direction (X-axis direction) and up-down direction (Z-axis direction), and the storage portion thereof may face in the front-back direction (Y-axis direction).

Meanwhile, the present disclosure is not limited to a specific type or shape of battery cell 100, and various battery cells 100 known at the time of filing the present disclosure may be applied to configure the battery pack 1 of the present disclosure. Although the present embodiment describes a pouch-type secondary battery with high energy density and easy stacking as shown in the drawing, it is obvious that a cylindrical or prismatic secondary battery may also be applied to the battery cell 100 of the present disclosure.

The battery module 10 may include a module case 11. The module case 11 may be configured to have a space formed inside and accommodate at least some of the plurality of battery cells 100 in the inner space. In particular, the module case 11 may be included in each battery module 10 to group the plurality of battery cells 100 into several battery modules 10, thereby serving as a boundary for physically confining the inner space of each battery module 10. The module case 11 may be formed of a metal material having rigidity and heat resistance to physically or chemically protect the accommodated battery cells 100.

In addition, although not shown in the drawing, the battery module 10 may include a bus-bar assembly and/or a module terminal electrically connected to the plurality of battery cells 100 accommodated therein.

The battery module 10 may include a venting hole 12. The venting hole 12 may be configured to allow gas generated from the battery cell 100 accommodated inside the module case 11 to be discharged to the outside of the module case 11.

Specifically, the venting hole 12 may be provided in the module case 11 to enable directional venting in a specific direction. For example, as shown in FIG. 3, the venting hole 12 may be provided on the top of the module case 11. According to this implemented configuration, the venting gas and/or flame may be guided to be discharged upward from the battery module 10.

Referring to FIG. 2, the pack case 200 may be configured to accommodate a plurality of battery cells 100 or a plurality of battery modules 10. That is, the pack case 200 may provide an accommodation space for receiving a plurality of battery cells 100 or a plurality of battery modules 10. The pack case 200 may be made of a material exhibiting mechanical strength, for example, metal such as steel or SUS or plastic, or may include such a material in order to safely protect the battery cells 100 accommodated therein.

In addition, the pack case 200 may be equipped with a venting unit V. The venting unit V may be configured to discharge gas generated from the battery cells 100 accommodated inside to the outside of the pack case 200. The venting unit V may be configured in the form of a hole penetrating between the inside and the outside of the pack case 200.

Alternatively, the venting unit V may be configured as a venting device that is mounted in the hole of the pack case 200 and operates when venting gas is generated inside the pack case 200.

For example, the venting unit V may have a venting valve or may be implemented as a venting valve. In this case, a mounting hole may be formed in the pack case 200 so that the venting unit V may be mounted in the mounting hole. If the venting unit V is provided with a venting valve or is implemented as a venting valve, the venting valve may be opened when the internal pressure of the pack case 200 increases, thereby discharging the venting gas to the outside of the pack case 200.

Meanwhile, the battery pack 1 according to an embodiment of the present disclosure may further include a composite blocking member 300. The composite blocking member 300 may be configured to cover at least a portion of the venting unit V. According to an embodiment of the present disclosure, the composite blocking member 300 may be configured to block flame or the like generated inside the pack case 200 from passing through the venting unit V and being exposed to the outside of the pack case 200. The composite blocking member 300 may be made of a material having low thermal conductivity and excellent heat resistance and/or fire resistance.

A flame with strong straightness may be emitted from the battery cell 100 and may hit the internal structure of the pack case 200 and move to the venting unit V. According to the above-implemented configuration of the present disclosure, the flame may be prevented from being discharged to the outside of the pack case 200 through the venting unit V by the composite blocking member 300. Therefore, the thermal runaway propagation prevention performance may be effectively secured in units of battery packs. Therefore, according to the above aspect of the present disclosure, the safety and reliability of the battery pack 1 may be guaranteed.

Referring to FIGS. 4 and 5, the composite blocking member 300 may be provided between the plurality of battery cells 100 and the venting unit V. That is, the composite blocking member 300 may be provided on the inner side of the pack case 200, in particular, on the inner side of the venting unit V. Specifically, venting gas and/or flame generated from the battery cell 100 may move to the venting unit V. That is, a venting pass, through which the venting gas and/or flame flows, may be formed between the plurality of battery cells 100 and the venting unit V. In this case, the composite blocking member 300 may be provided to cross the venting pass. That is, the composite blocking member 300 may be provided on the venting pass to suppress the movement of the flame or the like.

According to the above-implemented configuration of the present disclosure, since the flame generated from the battery cell 100 is blocked before reaching the venting unit V of the pack case 200, the flame may be more effectively suppressed from being discharged to the outside.

Meanwhile, referring to FIG. 2, FIG. 4, and FIG. 5, the pack case 200 may include a base frame 210 and a side frame 220.

The base frame 210 may constitute the bottom of the pack case 200 and may be configured in an approximately square plate. In addition, the base frame 210 may be configured so that a plurality of battery cells 100 are placed on the upper surface thereof. Furthermore, the base frame 210 may be configured to have a flat upper surface so that the plurality of battery cells 100 or module cases 11 may be stably placed thereon.

The side frame 220 may extend upward from respective edges of the base frame 210. The side frame 220 may be configured as a plurality of unit walls to surround the plurality of battery cells 100 or battery modules 10. More specifically, the side frame 220 may include a rear wall located at the end of the base frame 210 in the -Y-axis direction, a right wall located at the end in the +X-axis direction, a front wall located at the end in the +Y-axis direction, and a left wall located at the end in the -X-axis direction, thereby constituting the side surfaces of the pack case 200.

The pack case 200 may further include a pack lid 230. The pack lid 230 may be configured to cover the top of the plurality of battery cells 100. To this end, the pack lid 230 may be coupled to the top of the side frame 220 so as to form the upper surface of the pack case 200.

The pack lid 230 may protect components, such as the battery cells 100, stored inside and prevent venting gas and/or flame released from the battery cells 100 from being discharged to the outside, in particular, toward the upper portion, of the pack case 200. In particular, the pack lid 230 may guide venting gas and flame from the inner space of the pack case 200 toward the venting unit V.

Referring to FIG. 2 and FIG. 5, the pack case 200 may further include a cross-beam 240. The cross-beam 240 may be provided to partition the plurality of battery cells 100 or battery modules 10. The cross-beam 240 may be provided between the plurality of battery cells 100 and the side frame 220 provided with the venting unit V. For example, the cross-beam 240 may be configured as a partition extending in the left-right direction, and may be interposed between the battery modules 10 that are disposed adjacently in the front-back direction. In addition, the cross-beam 240 may be configured as a partition extending in the front-back direction, and may be interposed between battery modules 10 that are disposed adjacently in the left-right direction.

The cross-beam 240 may be provided to be spaced a predetermined distance apart from the pack lid 230. That is, the cross-beam 240 may be configured to be spaced apart by a predetermined distance such that at least a portion of the top does not come into contact with the lower surface of the pack lid 230.

According to this implemented configuration, heat or flame may be prevented from directly moving between the cell assemblies or battery modules 10 whose storage space is partitioned by the cross-beam 240. In addition, according to the above-implemented configuration, the space between the cross-beam 240 and the pack lid 230 may further guide the gas or flame generated from the battery cell 100 to move upward from the inner space of the pack case. For example, as indicated by the dotted arrow in FIG. 5, the flame F and the like may move to the space between the cross-beam 240 and the pack lid 230 and may be reflected on the pack lid 230 or may flow along the lower surface of the pack lid 230 toward the venting unit V to reach the composite blocking member 300 that covers the venting unit V. According to the above-implemented configuration of the present disclosure, the composite blocking member 300 may more reliably block the flame heading for the venting unit V.

Meanwhile, the venting unit V may be provided on the side surface of the pack case 200, that is, on the side frame 220. In this case, the composite blocking member 300 may be provided on the side of the side frame 220 so as to cover the venting unit V.

A plurality of venting units V and a plurality of composite blocking members 300 may be provided. In particular, the venting units V may be located in at least some of the unit walls of the side frame 220. In addition, the venting units V may be formed separately on two or more unit walls, or two or more venting units V may be formed on one unit wall. For example, referring to FIG. 2, a plurality of venting units V may be provided on the front wall and rear wall, respectively. The plurality of venting units V and composite blocking members 300 may be provided symmetrically with respect to the center of the side frame 220.

According to the above-implemented configuration of the present disclosure, when the battery cell 100 is in an abnormal state, high-temperature gas or the like may be discharged in both directions of the pack case 200, thereby facilitating quick discharging of the gas to the outside of the pack case 200.

Meanwhile, the number of installations and locations of the venting units V and composite blocking members 300 described in the embodiment of FIG. 2 are only examples, and it is obvious that the number or locations may vary.

The composite blocking member 300 may be configured to face the side frame 220 where the venting unit V is provided. In this case, the composite blocking member 300 may be provided to be spaced a predetermined distance apart from the side frame 220. According to the above-implemented configuration of the present disclosure, a distance secured between the composite blocking member 300 and the side frame 220 may form a space through which the venting gas may flow. Furthermore, in this case, the venting gas may also be discharged through a portion covered by the composite blocking member 300 in the venting unit V. Therefore, the venting gas may be discharged more smoothly to the venting unit V through the space provided at the rear of the composite blocking member 300.

Therefore, according to the configuration of the present disclosure, flame and the like may be blocked by the composite blocking member 300, and at the same time, venting gas may be smoothly discharged. Accordingly, when an abnormal situation occurs in the battery cell 100, the venting gas may be quickly discharged to the outside of the pack case 200 through the venting unit V, thereby preventing the internal pressure of the pack case 200 from increasing and preventing further chain ignition of other battery cells 100.

The composite blocking member 300 may be connected to the side frame 220 by a coupling member 400. For example, as shown in FIG. 5, the coupling member 400 may be configured as a bolt, and the composite blocking member 300 may be bolted to the side frame 220.

According to the above-implemented configuration of the present disclosure, the coupling and fixing between the composite blocking member 300 and the side frame 220 may be enabled by a simple structure. In this case, since the composite blocking member 300 is firmly fixed by the coupling member 400 and does not move easily due to the pressure of flame or the like, the flame blocking effect for the venting unit V may be more stably attained. In addition, according to the above-implemented configuration of the present disclosure, the assembly of the battery pack 1 may be facilitated, thereby improving productivity.

As another example, the composite blocking member 300 may be attached to the side frame 220. As another example, the composite blocking member 300 may be configured as a partition in addition to the side frame 220 or may replace the side frame 220.

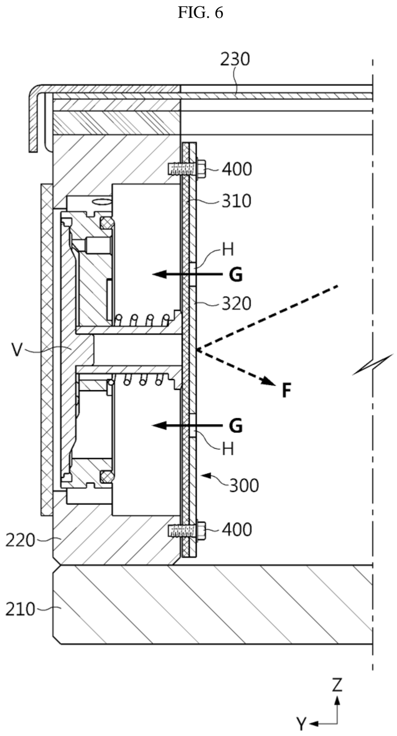

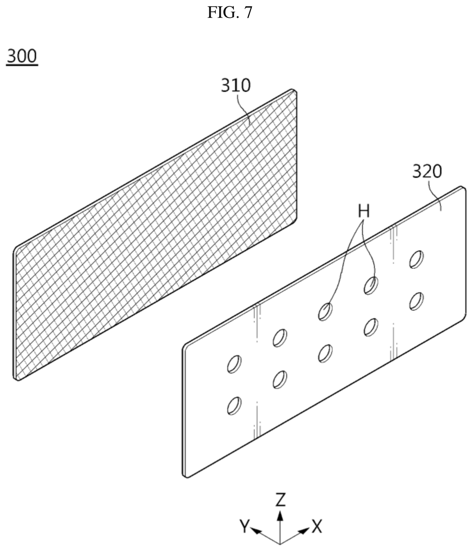

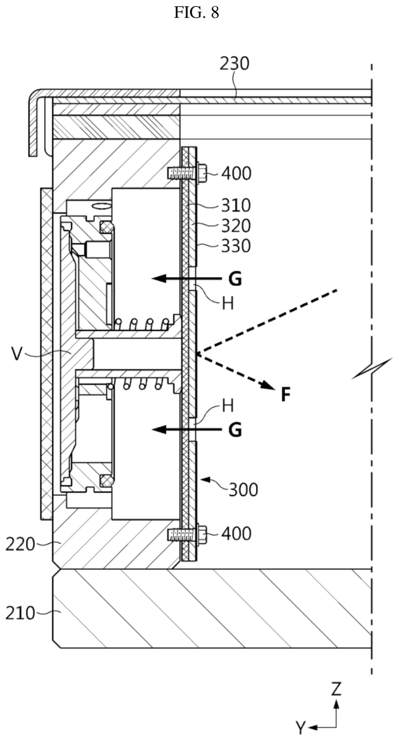

FIG. 6 is an enlarged cross-sectional view of a primary part of a battery pack according to an embodiment of the present disclosure, FIG. 7 is an exploded perspective view of a composite blocking member included in a battery pack according to an embodiment of the present disclosure, and FIG. 8 is an enlarged cross-sectional view of a primary part of a battery pack according to another embodiment of the present disclosure.

The composite blocking member 300 may be configured as a plate configured to cover the venting unit V. The composite blocking member 300 manufactured as a plate may be provided to face the venting unit V or the side frame 220 in parallel. According to the above-implemented configuration of the present disclosure, the composite blocking member 300 may cover the venting unit V more easily. In addition, according to the above-implemented configuration of the present disclosure, the battery pack 1 may be easily assembled, thereby reducing time and cost.

The composite blocking member 300 may be configured as a multi-structured plate. For example, the composite blocking member 300 may be configured in a double or triple structure. Specifically, referring to FIGS. 6 and 7, the composite blocking member 300 may include a mesh member 310 and a blocking wall 320. As described above, the composite blocking member 300 may be configured in a multi-structured plate configured to cover the venting unit V.

The mesh member 310 may be configured to filter flame and allow gas to pass therethrough. This mesh member 310 may be configured such that multiple pores are formed in a plate-like member or such that multiple wires are woven like a net. In this case, the pores may be configured to have a size capable of filtering flame discharged to the outside of the pack case 200. That is, the mesh member 310 may capture flame or the like to delay or block them from being discharged to the outside. In addition, the mesh member 310 may be configured to allow the venting gas G to pass therethrough.

According to the above-implemented configuration of the present disclosure, exposure of flames to the outside of the pack case 200 may be minimized, and the venting gas may be quickly discharged. In addition, according to the above-implemented configuration of the present disclosure, the mesh member 310 may form an insulating air layer, thereby delaying or blocking thermal propagation.

The blocking wall 320 may be configured to block flames F from the inside of the pack case 200 toward the venting unit V. The blocking wall 320 may be made of a material having excellent heat resistance and/or fire resistance. For example, the blocking wall 320 may be configured to include a mica material. According to the above-implemented configuration of the present disclosure, even if high-temperature heat is generated, shrinkage does not occur and morphological stability may be maintained, so that high-temperature gas or flame generated from the battery cell 100 may be stably blocked.

The blocking wall 320 may be provided on at least one side of the mesh member 310 so as to cover at least one side of the mesh member 310. The blocking wall 320 may be provided on the front side and/or rear side of the mesh member 310. For example, as illustrated in FIG. 6, the mesh member 310 may be provided on the rear side relative to the venting unit V, and the blocking wall 320 may be provided on the rear side of the mesh member 310 so as to cover the rear side of the mesh member 310. According to the above-implemented configuration of the present disclosure, the flame may be primarily blocked by the blocking wall 320 and secondarily blocked by the mesh member 310, thereby more effectively preventing the venting unit V from being exposed to the flame.

The composite blocking member 300 may include a through-hole H. The through-hole H may be configured to perforate a portion of the blocking wall 320 such that the venting gas G may pass therethrough. According to the above-implemented configuration of the present disclosure, as indicated by the bold arrow in FIG. 6, the venting gas G may be introduced through the through-hole H and then discharged to the outside of the pack case 200 through the venting unit V. Accordingly, when an abnormal situation occurs in the battery cell 100, the venting gas may be quickly discharged to the outside of the pack case 200 through the venting unit V, thereby preventing the internal pressure of the pack case 200 from increasing and suppressing or delaying further chain ignition of other battery cells 100.

In addition, according to the above-implemented configuration of the present disclosure, as indicated by the dotted arrow in FIG. 6, the flame may be mostly blocked in a portion where the through-hole H of the blocking wall 320 is not provided, and the flame that is not blocked by the blocking wall 320 and flows through the through-hole H may be filtered by the mesh member 310 so as not to be discharged to the venting unit V.

Referring to FIG. 8, the composite blocking member 300 may further include a coating layer 330. The coating layer 330 may be formed by coating the outer surface of the blocking wall 320. The coating layer 330 may include a material having fire resistance. Therefore, according to the above-implemented configuration of the present disclosure, since the coating layer 330 is provided on the outer surface of the blocking wall 320, it is possible to prevent heat conduction and heat radiation to the outside of the blocking wall 320. Therefore, according to the above-implemented configuration of the present disclosure, the thermal runaway propagation may be effectively prevented or delayed in units of battery packs 1.

For example, the coating layer 330 may be a ceramic coating layer. Existing ceramic coatings are formed by adding ceramic, as additives, to an organic substance (e.g., fluorine resin). The coating layer 330 may be a ceramic coating layer excluding organic substances and having ceramic as a main raw material. The ceramic coating layer may be formed by applying a coating material including ceramic powder and naturally curing or curing at a low temperature of about 200 degrees C. The coating material may be a slurry made by mixing fine ceramic powders such as alumina and silica with water, an inorganic dispersant or the like. The coating material may also further include inorganic oxides (K₂O, BaO, and the like) enabling formation of a glassy substance. However, this slurry does not contain an organic solvent or an organic binder. If it contains an organic solvent or an organic binder, the heat resistance becomes low and it deteriorates over time after the coating is formed. This slurry-type coating material may be applied to the surface of the blocking wall 320 and then cured to form a ceramic coating layer. The application may be performed by any method such as dip coating, spin coating, spray coating, or brushing. The slurry-type coating material may be directly coated on the blocking wall 320 to perform low-temperature fusion, may be environmentally friendly and harmless to the human body, and may have excellent corrosion resistance, wear resistance, and adhesion.

The ceramic coating layer may block flames of 1000 degrees C or higher. Accordingly, the effect of blocking flame propagation to the neighboring composite blocking member 300 may be increased. In addition, the ceramic coating layer may further improve the durability of the composite blocking member 300.

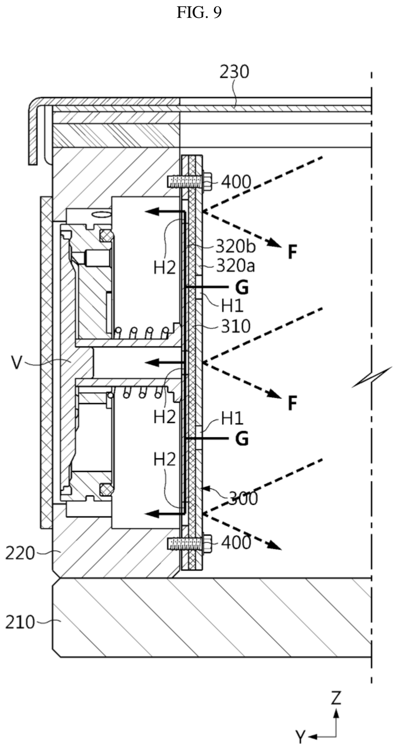

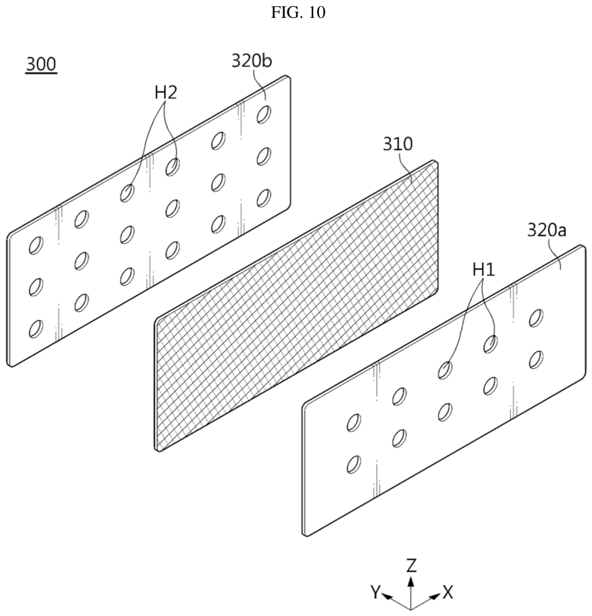

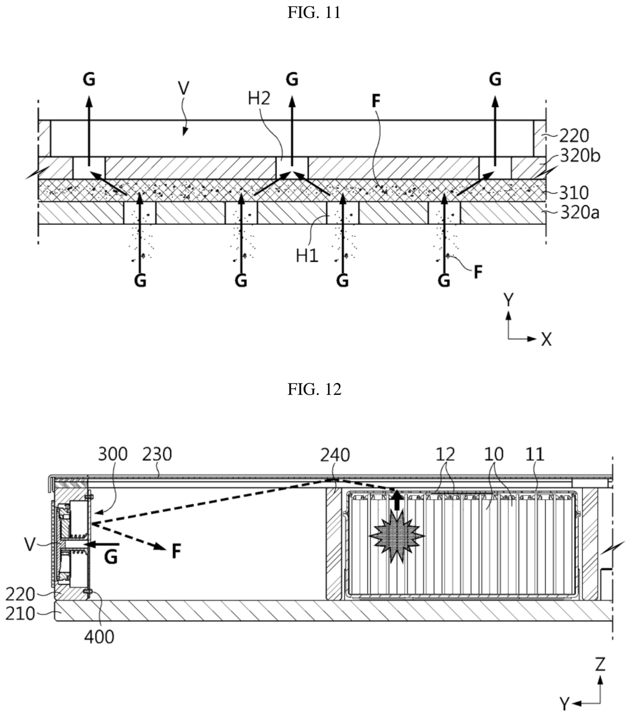

FIG. 9 is an enlarged cross-sectional view of a primary part of a battery pack according to another embodiment of the present disclosure, and FIG. 10 is an exploded perspective view of a composite blocking member included in a battery pack according to another embodiment of the present disclosure. In addition, FIG. 11 is a cross-sectional view of a battery pack when viewed from above according to another embodiment of the present disclosure, which may be a cross-sectional view taken along line II - II' in FIG. 1.

According to another embodiment of the present disclosure, the composite blocking member 300 may be configured as a triple-structured plate. Specifically, the blocking wall 320 may include a first blocking wall 320a and a second blocking wall 320b. The first blocking wall 320a and the second blocking wall 320b may be configured to cover the mesh member 310 on both sides of the mesh member 310. For example, as illustrated in FIGS. 9 to 11, the first blocking wall 320a may be provided on one side of the mesh member 310, that is, on the front side thereof. That is, the first blocking wall 320a may be provided between the venting unit V and the mesh member 310. In addition, the second blocking wall 320b may be provided on the other side of the mesh member 310, that is, on the rear side thereof. Here, the front side may be directed to the +Y-axis direction, and the rear side may be directed to the -Y-axis direction.

According to this configuration of the present disclosure, the mesh member 310 may delay or block flames F and the like from being discharged to the outside. The second blocking wall 320b may delay or block flames F and the like that were not blocked by the mesh member 310 from being discharged. As a result, the composite blocking member 300 with a triple structure may suppress thermal propagation more reliably, thereby improving the thermal safety of the battery pack 1.

The mesh member 310, the first blocking wall 320a, and the second blocking wall 320b may be configured to be stacked in one direction. For example, the mesh member 310, the first blocking wall 320a, and the second blocking wall 320b may be stacked in the front-back direction (Y-axis direction). That is, the venting unit V, the second blocking wall 320b, the mesh member 310, and the first blocking wall 320a may be disposed in sequence along the front-back direction. The first blocking wall 320a and the second blocking wall 320b may support the mesh member 310 from both sides. According to this configuration of the present disclosure, the mesh member 310 may be stably fixed by the first blocking wall 320a and the second blocking wall 320b provided on both sides. Accordingly, the mesh member 310 may be prevented from being deformed by high-temperature flame or the like, thereby suppressing release of flame or the like more stably.

The composite blocking member may include a first through-hole H1 and a second through-hole H2 configured to allow gas to pass therethrough. One or more first through-holes H1 and second through-holes H2 may be formed, respectively. The first through-holes H1 and the second through-holes H2 may be formed on the first blocking wall 320a and the second blocking wall 320b, respectively. In this case, the flame may also pass through the first through-hole H1 and the second through-hole H2. Thus, as shown in FIG. 11, the first blocking wall 320a may block flames F or the like, and gas G or flames F not blocked by the first blocking wall 320a may flow into the mesh member 310 through the first through-hole H1. At this time, the mesh member 310 may capture flames F or the like, and allow the gas G to pass therethrough. In addition, the second blocking wall 320b may allow the gas G to pass through the second through-holes H2 to the venting unit V.

According to this configuration of the present disclosure, when a thermal event occurs, the composite blocking member 300 may block flames F or the like and smoothly discharge gas G to the outside, thereby suppressing thermal propagation. As a result, the thermal safety of the battery pack 1 may be improved.

Referring to FIGS. 9 to 11, a plurality of first through-holes H1 and a plurality of second through-holes H2 may be provided. In this case, the first through-holes H1 may be configured to be fewer than the second through-holes H2. That is, the second through-holes H2, which are closer to the venting unit V than the first through-holes H1, may be provided more than the first through-holes H1 so that the gas may be smoothly discharged to the venting unit V.

The first through-holes H1 and the second through-holes H2 may be configured to be staggered with each other in the one direction (front-back direction). That is, the plurality of first through-holes H1 may be arranged in rows and columns, and the second through-holes H2 may be arranged in rows and columns along one direction to be staggered with respect to the first through-holes H1. For example, as shown in FIG. 10, the first through-holes H1 may be arranged in, for example, 2 rows by 5 columns on the first blocking wall 320a, and the second through-holes H2 may be arranged in, for example, 3 rows by 6 columns between the first through-holes H1 so that they do not overlap each other in the front-back direction.

According to this embodiment of the present disclosure, since the first through-holes H1 and the second through-holes H2 are arranged in a staggered manner, the movement path of gas G, flame F, or the like may be increased when a thermal event occurs. In order for the flame F to reach the venting unit V, it must pass through the first through-holes H1 and the mesh member 310, and then pass through the second through-holes H2 that are located to be staggered with the first through-holes H1. For example, the flame F may be discharged in the Y-axis direction if the composite blocking member 300 is not provided, whereas the flame F may be discharged in a zigzag direction with respect to the Y-axis if the composite blocking member 300 is provided. Therefore, the movement path of flame or the like may be extended, thereby reducing the intensity of flame. As a result, the composite blocking member 300 may further reliably suppress or block the flame F or the like from being discharged outside the battery pack 1. Meanwhile, the number and arrangement of the first through-holes H1 and second through-holes H2 may vary to further increase the movement path.

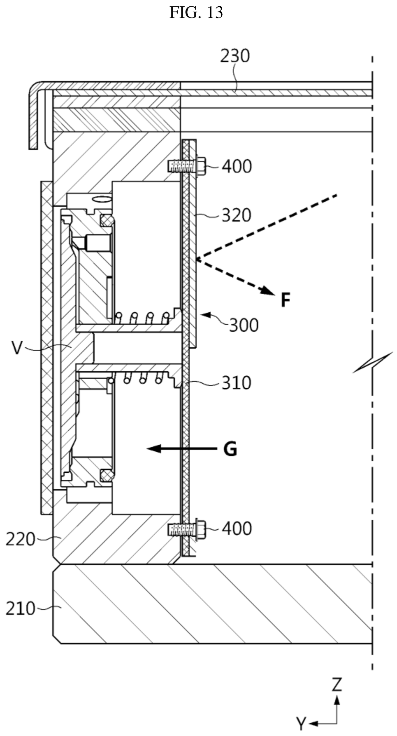

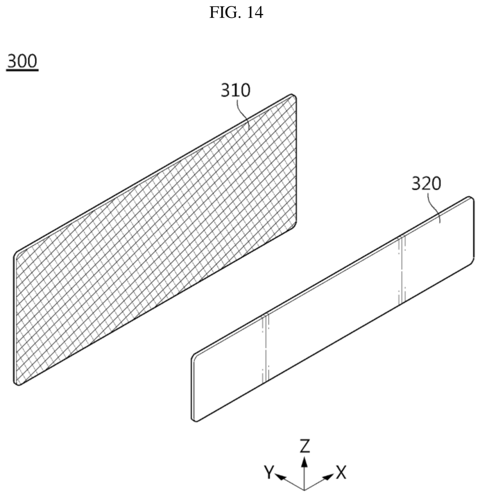

FIG. 12 is a cross-sectional view of a battery pack according to another embodiment of the present disclosure, which may be, for example, a cross-sectional view taken along line I - I' in FIG. 1. FIG. 13 is an enlarged cross-sectional view of a primary part of a battery pack according to another embodiment of the present disclosure, and FIG. 14 is an exploded perspective view of a composite blocking member included in a battery pack according to another embodiment of the present disclosure.

According to another embodiment of the present disclosure, the composite blocking member 300 may include a mesh member 310 and a blocking wall 320, which have different sizes. Specifically, the mesh member 310 may be configured to completely cover the front of the venting unit V, and the blocking wall 320 may be configured to cover the upper portion of the venting unit V provided inward from the mesh member 310, thereby blocking the flame. For example, the blocking wall 320 may be configured to cover only the upper portions of the mesh member 310 and the venting unit V. In this case, the blocking wall 320 may not have a through-hole H. Accordingly, gas or flame heading for the venting unit V may not pass through the blocking wall 320.

The venting gas or flame released from the battery cell 100 may be in a high-temperature state and may have a strong tendency to move upward. In particular, in the case where the venting hole 12 is provided in the upper portion of the battery module 10, as indicated by the dotted arrow in FIG. 12, the venting gas or flame may be guided to the upper side of the pack case 200.

Therefore, as in the above embodiment, in the case where the blocking wall 320 is configured to cover the upper portion of the venting unit V, the flame with strong straightness may be prevented from being discharged to the outside more reliably by ensuring that it collides with the blocking wall 320. In addition, the flame or the like, which is not blocked by the blocking wall 320, may be blocked by the mesh member 310. At the same time, as indicated by the bold arrow in FIG. 12, the venting gas may be smoothly discharged to the outside of the pack case 200 through the lower portion of the mesh member 310, which is exposed without being covered by the blocking wall 320, due to the internal pressure.

In addition, according to the above-implemented configuration of the present disclosure, in the event that high-temperature gas or the like is discharged to the outside of the pack case 200 in a situation such as thermal runaway, the discharged gas may not be directed to the upper side. In particular, in the case where a passenger is located above the battery pack 1 in an electric vehicle, if the upward discharge of gas or flame is suppressed, the safety of the passenger may be further improved. That is, according to the implemented configuration of the present disclosure, directional venting toward the bottom of the battery pack 1 may be performed, so the safety of users such as the passenger located above the battery pack may be improved.

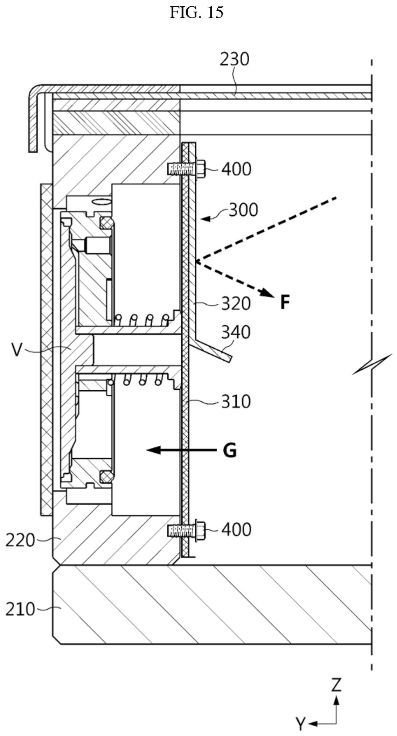

FIG. 15 is an enlarged cross-sectional view of a primary part of a battery pack according to another embodiment of the present disclosure.

The composite blocking member 300 may further include a lower bent portion 340. The lower bent portion 340 may be configured to extend from the lower end of the blocking wall 320. The lower bent portion 340 may be configured to be bent from the lower end of the blocking wall 320 at a predetermined angle in a direction away from the mesh member 310 (a direction to the inside of the pack case 200). Furthermore, the lower bent portion 340 may be configured to be bent such that it gradually approaches the base frame 210 as it further extends to the inside (in the -Y-axis direction in FIG. 15). Here, the lower bent portion 340 may be configured in a diagonal form. For example, the lower bent portion 340 may be configured to form an obtuse angle with the blocking wall 320.

According to the above-implemented configuration of the present disclosure, flames that collide with the blocking wall 320 and are reflected downward may be guided toward the inside of the pack case 200. Accordingly, the flame may be more reliably blocked from heading back to the venting unit V, thereby more effectively suppressing the flame from being discharged to the outside of the pack case 200.

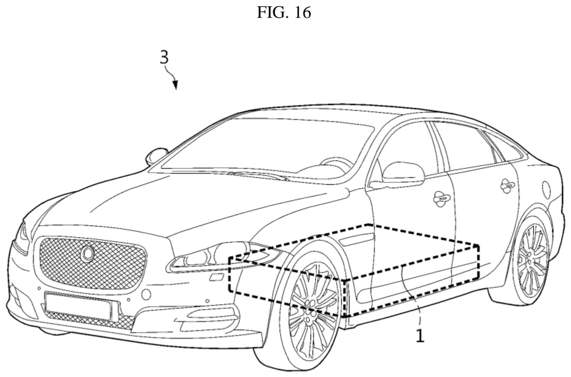

FIG. 16 is a schematically perspective view of a vehicle including a battery pack according to an embodiment of the present disclosure.

Referring to FIG. 16, a vehicle 3 according to an embodiment of the present disclosure may include one or more battery packs 1 according to the above-described embodiments. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may drive by receiving power from the battery pack 1 or the battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery cells;
a pack case configured to accommodate the plurality of battery cells and having a venting unit configured to discharge gas generated from the battery cells to the outside; and
a composite blocking member configured to cover at least a portion of the venting unit and block flame generated inside the pack case from being exposed to the outside.

2. The battery pack according to claim 1,
wherein the composite blocking member is provided between the plurality of battery cells and the venting unit.

3. The battery pack according to claim 1,
wherein the pack case comprises
a base frame on which the plurality of battery cells are placed, and
a side frame extending upward from the base frame and having the venting unit provided thereon, and
wherein the composite blocking member is configured to face the side frame on which the venting unit is formed.

4. The battery pack according to claim 3,
wherein the composite blocking member is configured to be bolted to the side frame.

5. The battery pack according to claim 1,
wherein the composite blocking member is configured in a multi-structured plate configured to cover the venting unit.

6. The battery pack according to claim 1,
wherein the composite blocking member comprises
a mesh member configured to filter the flame and allow the gas to pass therethrough, and
a blocking wall provided on at least one side of the mesh member so as to cover at least one side of the mesh member.

7. The battery pack according to claim 6,
wherein the blocking wall is configured to include a mica material.

8. The battery pack according to claim 6,
wherein the composite blocking member comprises
a through-hole formed by perforating a portion of the blocking wall and configured to allow the gas to pass therethrough.

9. The battery pack according to claim 6,
wherein the composite blocking member further comprises
a coating layer formed by coating an outer surface of the blocking wall with a material having fire resistance.

10. The battery pack according to claim 6,
wherein the blocking wall comprises
a first blocking wall provided between the venting unit and the mesh member, and
a second blocking wall provided on the other side of the mesh member.

11. The battery pack according to claim 10,
wherein the mesh member, the first blocking wall, and the second blocking wall are configured to be stacked in one direction.

12. The battery pack according to claim 11,
wherein the composite blocking member comprises
one or more first through-holes and one or more second through-holes formed on the first blocking wall and the second blocking wall, respectively, and configured to allow the gas to pass therethrough.

13. The battery pack according to claim 12,
wherein the first through-holes and the second through-holes are configured to be staggered with each other along the one direction.

14. The battery pack according to claim 12,
wherein a plurality of first through-holes are arranged in rows and columns, and
wherein the second through-holes are arranged in rows and columns to be staggered with the first through-holes along the one direction.

15. The battery pack according to claim 6,
wherein the mesh member is configured to completely cover the front of the venting unit, and
wherein the blocking wall is provided further inward than the mesh member and configured to cover an upper portion of the venting unit, thereby blocking the flame.

16. The battery pack according to claim 15,
further comprising a module case configured to accommodate the plurality of battery cells in an inner space thereof and having a venting hole formed on the upper side so as to communicate with the inner space.

17. The battery pack according to claim 15,
wherein the composite blocking member further comprises a lower bent portion configured to be bent from a lower end of the blocking wall in a direction away from the mesh member.

18. The battery pack according to claim 17,
wherein the lower bent portion is configured to form an obtuse angle with the blocking wall.

19. A vehicle comprising a battery pack according to any one of claims 1 to 18.
